(19) Europäisches Patentamt
European Patent Office
Office européen des brevets

(11) **EP 3 012 478 B1**

(12) **EUROPÄISCHE PATENTSCHRIFT**

(45) Veröffentlichungstag und Bekanntmachung des Hinweises auf die Patenterteilung:
**13.12.2017 Patentblatt 2017/50**

(51) Int Cl.:
*F16D 48/08* (2006.01)    *B60W 30/18* (2012.01)
*B60W 10/02* (2006.01)    *B60W 10/06* (2006.01)

(21) Anmeldenummer: **15001960.2**

(22) Anmeldetag: **01.07.2015**

(54) **VERFAHREN ZUR STEUERUNG EINES ANTRIEBSSTRANGS BEIM ANFAHRVORGANG EINES KRAFTFAHRZEUGS, SOWIE STEUERUNG FÜR DEN ANTRIEBSSTRANG**

METHOD FOR CONTROLLING A DRIVE TRAIN WHEN STARTING UP A MOTOR VEHICLE, AND CONTROL SYSTEM FOR THE DRIVE CHAIN

PROCÉDÉ DE COMMANDE D'UNE CHAÎNE CINÉMATIQUE LORS DU PROCESSUS DE DÉMARRAGE D'UN VÉHICULE AUTOMOBILE ET DISPOSITIF DE COMMANDE POUR LA CHAÎNE CINÉMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2014 DE 102014015807**

(43) Veröffentlichungstag der Anmeldung:
**27.04.2016 Patentblatt 2016/17**

(73) Patentinhaber: **MAN Truck & Bus AG 80995 München (DE)**

(72) Erfinder:
• **Hör, Marc**
  **82256 Fürstenfeldbruck (DE)**
• **Berchtold, Florian**
  **85748 Garching b. München (DE)**
• **Weiner, Martin**
  **83624 Otterfing (DE)**
• **Franke, Olaf**
  **80807 München (DE)**

(74) Vertreter: **v. Bezold & Partner Patentanwälte - PartG mbB Akademiestraße 7 80799 München (DE)**

(56) Entgegenhaltungen:
EP-A1- 1 623 901      WO-A1-03/058093
DE-A1-102005 029 566  DE-A1-102007 037 831
US-A1- 2014 141 935

**Beschreibung**

Die Erfindung betrifft ein Verfahren zur Steuerung eines Antriebsstrangs beim Anfahrvorgang eines Kraftfahrzeugs, wobei das Kraftfahrzeug einen Motor, ein Getriebe und eine automatisch betätigte Kupplung aufweist. Die Erfindung betrifft ferner eine Steuerung für den Antriebsstrang beim Anfahren eines derartigen Kraftfahrzeugs.

Es ist allgemein der Fall, dass ein Kupplungseingriff ein Anpassen der Drehgeschwindigkeiten der jeweiligen Teile der Kupplung und der dazugehörigen Elemente bedingt und dass die durch den Drehzahlunterschied (Schlupfwert) zwischen Motordrehzahl und Getriebeeingangsdrehzahl repräsentierte Energie in der Kupplung als Reibungshitze freigesetzt wird.

Beim Anfahren des Fahrzeugs wird daher die vom Motor erzeugte Energie nur teilweise in kinetische Energie für das Fahrzeug umgewandelt, da Teile davon in der rutschenden Kupplung freigesetzt werden. Ein solcher durch Schlupf bedingter Energieeintrag in die Kupplung beim Anfahrvorgang ist besonders bei schweren Nutzfahrzeugen problematisch, da aufgrund der hohen Fahrzeuggewichte die Kupplung einem hohen Drehmoment ausgesetzt ist.

Bei Nutzfahrzeugen mit einer automatisch betätigten Kupplung, d. h. einer automatisierten Kupplung, ist es daher aus der Praxis bekannt, dass ein Anfahrvorgang mit einer automatisch eingestellten Motordrehzahl erfolgt, die der Leerlaufdrehzahl entspricht oder zumindest möglichst nahe an der Leerlaufdrehzahl liegt. Eine möglichst geringe Anfahrdrehzahl reduziert aufgrund der geringeren, beim Schlupf auftretenden Drehzahldifferenz zwischen Motordrehzahl und Getriebeeingangsdrehzahl den schlupfbedingten Verschleiß der Kupplung, der überproportional zur Differenzdrehzahl ist. Bei Nutzfahrzeugen mit automatisierter Kupplung hat somit der Fahrer kaum Einfluss auf die beim Anfahrvorgang verwendete Motordrehzahl.

Steht das Nutzfahrzeug jedoch an einer Steigung und/oder ist schwer beladen, kann eine höhere Anfahrdrehzahl und damit ein höheres erzeugbares Anfahrmoment zur Überwindung des erhöhten Fahrwiderstands notwendig sein. Aus der Praxis ist es daher ferner bekannt, dass eine Motor- und Getriebesteuerung zu Beginn des Anfahrvorgangs bestimmt, ob eine Situation erhöhten Fahrwiderstands aufgrund z. B. einer Fahrbahnsteigung oder einer schweren Beladung des Fahrzeugs vorliegt. Ist dies der Fall, wird statt der normalen Anfahrdrehzahl von z. B. 600 U/min eine erhöhte Anfahrdrehzahl des Motors von z. B. 800 U/min eingestellt, damit trotz einer Fahrbahnsteigung und/oder einer hohen Zuladung ein Anfahren des Fahrzeugs ermöglicht wird.

Nachteilig hieran ist, dass die Bestimmung des Fahrwiderstands nicht immer exakt möglich ist oder sich zum Beispiel aufgrund der Fahrbahnbeschaffenheit sehr schnell ändern kann. Falls somit eine aktuelle Steigung von einem Neigungssensor des Fahrzeugs nicht richtig erkannt wird, kann der Fall eintreten, dass ein Anfahren des Nutzfahrzeugs mit automatisierter Kupplung nicht möglich ist, da die für den falsch ermittelten Fahrwiderstand eingestellte Anfahrmotordrehzahl zu niedrig sein kann. Ein Anfahrvorgang kann ebenfalls scheitern, falls beispielsweise in der Ebene ein großer Stein vor einem Rad des Fahrzeugs liegt, der zu einem erhöhten Anfahrwiderstand führt, für dessen Überwindung die eingestellte Anfahrmotordrehzahl unzureichend ist.

Die Offenlegungsschrift DE 10 2005 029 566 A1 offenbart ein Verfahren, nach dem Oberbegriff des Anspruchs 1, zum Schutz einer automatisierten betätigten Kupplung eines Fahrzeugs gegen Überlastung. Hierbei wird die Fahrsituation des Fahrzeugs festgestellt, es wird die in die Kupplung eingetragene Energie kontinuierlich festgestellt, in Abhängigkeit von der festgestellten Fahrsituation und der eingetragenen Energie wird durch gezielten Eingriff in das Fahrzeugmanagement der Überlastungszustand vermieden oder verringert. Dieses Verfahren kann eine thermische Belastung der Kupplung vermeiden, jedoch ist eine Unterstützung eines Anfahrvorgangs dadurch nicht möglich. Die Offenlegungsschrift US 2014/0141935 A1 beschreibt ein Verfahren zur Steuerung eines Antriebsstrangs mit automatisierter Kupplung. Hierbei werden, wenn der Fahrer feststellt, dass der Anfahrvorgang auf Grund eines Hindernisses unerfolgreich ist, Gegenmaßnahmen, wie eine Erhöhung der Motordrehzahl eingeleitet.

Es ist somit eine Aufgabe der Erfindung, ein verbessertes Verfahren zum Steuern eines Antriebsstrangs beim Anfahrvorgang eines Kraftfahrzeugs mit einem Motor, einem Getriebe und einer automatisch betätigten Kupplung bereitzustellen, mit dem Nachteile herkömmlicher Verfahren vermieden werden können. Die Aufgabe der Erfindung ist es insbesondere, ein Verfahren bereitzustellen, das auch bei falsch bestimmtem Fahrwiderstand zuverlässig ein Anfahren des Fahrzeugs ermöglicht. Eine weitere Aufgabe der Erfindung ist es, eine Steuerung für den Antriebsstrangs eines Kraftfahrzeugs mit einem Motor, einem Getriebe und einer automatisch betätigten Kupplung bereitzustellen, die Nachteile herkömmlicher Steuerungen vermeidet.

Diese Aufgaben werden durch ein Verfahren gemäß den Merkmalen des Hauptanspruchs und durch eine Steuerung gemäß den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zur Steuerung eines Antriebsstrangs beim Anfahrvorgang eines Kraftfahrzeugs vorgeschlagen, wobei das Kraftfahrzeug einen Motor, ein Getriebe und eine automatisch betätigte Kupplung aufweist. Der Antriebsstrang des Kraftfahrzeugs kann insbesondere einen als turboaufgeladener Verbrennungsmotor ausgebildeten Antriebsmotor und eine als automatisierte Reibungskupplung ausgebildete Anfahr- und Schaltkupplung umfassen. Das Kraftfahrzeug ist vorzugsweise ein Nutzfahrzeug.

Gemäß allgemeinen Gesichtspunkten der Erfindung umfasst das Verfahren die Bestimmung eines aktuellen Soll-Werts einer Größe, die sich in Abhängigkeit von einem beim Anfahrvorgang durch Schlupf erzeugten Energieeintrag in die Kupplung verändert. Das Verfahren umfasst ferner die Bestimmung eines Verlaufs eines Ist-Werts dieser Größe während des Anfahrvorgangs des Kraftfahrzeugs und das Erhöhen der Motordrehzahl während des Anfahrvorgangs, nachdem der Ist-Wert dieser Größe den aktuellen Soll-Wert um einen vorbestimmten Offset-Wert überschritten hat. Der Offset-Wert kann variabel sein, so dass der Wert für unterschiedliche Anfahrsituationen angepasst werden kann.

Gemäß einem hervorgehobenen Ausführungsbeispiel der Erfindung kann die Größe, die sich in Abhängigkeit von einem beim Anfahrvorgang durch Schlupf erzeugten Energieeintrag in die Kupplung verändert, direkt die Energie sein, die beim Anfahrvorgang durch Schlupf in der Kupplung freigesetzt wird, nachfolgend auch als Kupplungsenergie bezeichnet. Erfindungsgemäß kann somit ein aktueller Soll-Wert des Energieeintrags in die Kupplung bestimmt werden, der nicht zum Übertragen des Motormoments genutzt, sondern in Form von Wärmeverlusten in der Kupplung freigesetzt wird. Dieser Wert wird prädiktiv berechnet, d. h. vorhergesagt, und entspricht der unter normalen Umständen erwarteten, durch Schlupf bedingten durchschnittlichen Energiefreisetzung in der Kupplung, wenn der Anfahrvorgang erfolgreich durchgeführt werden würde. Ein erfolgreicher Anfahrvorgang ist gekennzeichnet durch das Erreichen der Synchrondrehzahl, ohne die Kupplung übermäßig zu verschleißen, und durch das Anfahren des Fahrzeugs.

Für die vorgenannte Größe kann alternativ oder zusätzlich zu der Kupplungsenergie beispielsweise eine Temperatur der Kupplung, die beim Anfahrvorgang durch Schlupf in der Kupplung erreicht wird, oder die schlupfbedingte Temperaturänderung der Kupplung verwendet werden, da die Temperatur bzw. Temperaturveränderung der Kupplung ebenfalls ein Maß für die durch Schlupf in der Kupplung freigesetzte Energie ist.

Ein besonderer Vorzug der Erfindung liegt somit darin, dass ein aktuell erwarteter, durch Schlupf bedingter Energieeintrag in die Kupplung oder eine damit in Zusammenhang stehende Größe vor oder zu Beginn des Anfahrvorgangs als prädizierte Größe in Form eines prädiktiven Soll-Werts berechnet wird und diese prädizierte Größe dann mit dem tatsächlichen, in der Kupplung erzeugten Energieeintrag beim Anfahrvorgang verglichen wird. Wenn der tatsächlich bestimmte Energieeintrag den prädiktiven Soll-Wert um den vorgegebenen Offset-Wert überschreitet, ist dies ein Zeichen dafür, dass der Anfahrvorgang nicht wie geplant verläuft, weil beispielsweise die Fahrbahnsteigung falsch ermittelt wurde oder weil ein vor einem Rad liegender Stein das Anfahren behindert. In einem solchen Fall reicht die eingestellte Motordrehzahl nicht aus, um ein ausreichend großes Anfahrmoment zur Überwindung des Fahrwiderstands zu erzeugen, so dass die Kupplung keine Synchrondrehzahl in der sonst üblichen Zeit erreicht und die in der Kupplung freigesetzte Energie den erwarteten Soll-Wert übersteigt.

Erfindungsgemäß wird dann bei Erkennen einer solchen Situation die Motordrehzahl signifikant erhöht, um den begonnen Anfahrvorgang erfolgreich beenden zu können und um zu verhindern, dass das Fahrzeug noch eine längere Zeit im Schlupf-Betrieb der Kupplung erfolglos versucht anzufahren.

Gemäß einer bevorzugten Ausgestaltungsform der Erfindung wird die Bestimmung des aktuellen Soll-Werts der Größe gestartet, wenn bei stehendem Fahrzeug das Fahrpedal betätigt wird und ein vorbestimmter Schwellenwert für den Fahrpedalweg überschritten wird. Hierdurch kann zuverlässig der Beginn eines Anfahrvorgangs erkannt werden, um die Bestimmung des aktuellen Soll-Werts der Größe zu triggern.

Der aktuelle Soll-Wert der Größe kann in Abhängigkeit von einer aktuellen Fahrbahnsteigung und/oder einer aktuellen Fahrzeugmasse und/oder abhängig von dem aktuellen Fahrwiderstand des Fahrzeugs ermittelt werden. Es wurde vorstehend bereits erwähnt, dass der Fahrwiderstand eines Fahrzeugs, der beim Anfahren überwunden werden muss, variieren kann und sich insbesondere durch die aktuelle Fahrbahnsteigung und durch das aktuelle Fahrzeuggewicht verändern kann. Mit zunehmendem Fahrwiderstand steigt auch der schlupfbedingte Energieeintrag in die Kupplung beim Anfahren, so dass der Soll-Wert für diesen Energieeintrag für die aktuelle Anfahrsituation entsprechend angepasst werden kann.

Beispielsweise kann ein vorab fahrzeugtypspezifischer schlupfbedingter Energieeintrag in die Kupplung experimentell bestimmt werden, der für das Fahrzeug im Zustand ohne Zuladung und beim Anfahren in der Ebene durchschnittlich erzeugt wird. Dieser Wert kann dann mittels einer in der Antriebsstrangsteuerung hinterlegten Kennlinie in Abhängigkeit von einer aktuellen Fahrbahnsteigung und/oder einer aktuellen Fahrzeugmasse für den aktuellen Anfahrvorgang angepasst werden.

Ferner besteht die Möglichkeit, den für den bevorstehenden Anfahrvorgang erwarteten schlupfbedingten Energieeintrag in die Kupplung direkt unter Verwendung der Größen zu berechnen, mit denen berechnet werden kann, welcher Teil der Motorenergie in Antriebsenergie des Getriebes umgesetzt wird, welcher Anteil durch nicht in der Kupplung auftretende Triebstrangverluste verloren geht und welcher Anteil durch Wärmeverluste in der Kupplung freigesetzt wird. Hierzu können eine oder mehrere der folgenden Größen verwendet werden: ein Motormomentgradient ($dM_M/dt$), ein Saugmoment des Antriebsmotors ($M_S$), eine Antriebsstrangübersetzung, eine Massenträgheit des Antriebsstrangs, ein Antriebsstrangverlust, eine Reifengröße, ein Kupplungsschließgradient und ein aktueller Fahrwiderstand. Zur Bestimmung des aktuellen Fahrwiderstands kann wiederum die aktuelle Fahrbahnsteigung und/oder das aktuelle Fahrzeuggewicht ermittelt werden. Die Werte für diese Größen können sensorisch ermittelt werden, geschätzt werden oder aus vorbestimmten Kennlinien oder Parametern bestimmt werden. Die Verwendung mehrerer dieser Größen erhöht die Genauigkeit der Vorhersage des erwarteten schlupfbedingten Energieeintrags in die Kupplung.

Es ist weiterhin vorteilhaft, eine Zwangsschließung der Kupplung einzuleiten, falls der Ist-Wert der Größe nach der Erhöhung der Motordrehzahl einen vorbestimmten Schwellenwert überschreitet, ohne dass eine Synchrondrehzahl zwischen Motordrehzahl und Getriebeeingangsdrehzahl erreicht wurde. Dadurch kann die Kupplung vor zu starker Abnutzung oder gar Beschädigung geschützt werden, falls auch die Erhöhung der Motordrehzahl keinen Anfahrvorgang ermöglicht.

Ferner besteht die Möglichkeit, eine Zwangsschließung der Kupplung einzuleiten, falls nach der Erhöhung der Motordrehzahl nicht innerhalb einer vorgegebenen Zeit eine Synchrondrehzahl zwischen Motordrehzahl und Getriebeeingangsdrehzahl erreicht wird.

Ferner besteht im Rahmen der Erfindung die Möglichkeit, die Anfahrmotordrehzahl, mit der der Anfahrvorgang initial gestartet wird, in Abhängigkeit von einem aktuellen Fahrwiderstand oder in Abhängigkeit von wenigstens einer den aktuellen Fahrwiderstand beeinflussenden Größe zu wählen, was an sich aus dem Stand der Technik bekannt ist. Diese Variante ermöglicht, eine aktuelle Fahrbahnsteigung oder eine hohe Fahrzeugzuladung und das dadurch erforderliche erhöhte Anfahrmoment bei Vorgabe der Motordrehzahl für den Anfahrvorgang zu berücksichtigen. Sollte hierbei jedoch ein Schätzfehler unterlaufen, ermöglicht die Erfindung wiederum durch nachträgliches zusätzliches Erhöhen der Motordrehzahl trotz eines solchen Schätzfehlers einen Anfahrvorgang zu ermöglichen.

Die Erfindung betrifft ferner eine Steuerung für den Antriebsstrang beim Anfahren eines Kraftfahrzeugs mit einem Motor, einem Getriebe und einer automatisch betätigten Kupplung, die eingerichtet ist, das Verfahren wie hierin offenbart durchzuführen.

Die Erfindung betrifft ferner ein Kraftfahrzeug, vorzugsweise Nutzfahrzeug, mit einer derartigen Steuerung. Zur Vermeidung von Wiederholungen sollen rein verfahrensgemäß offenbarte Merkmale auch als vorrichtungsgemäß im Hinblick auf die Steuerung offenbart gelten und beanspruchbar sein.

Weitere Einzelheiten und Vorteile der Erfindung werden im Folgenden unter Bezug auf die beigefügten Zeichnungen beschrieben. Es zeigen:

Figur 1  ein Ablaufdiagramm des Verfahrens gemäß einer Ausführungsform der Erfindung;

Figur 2  ein Diagramm zur Illustration des zeitlichen Verlaufs relevanter Antriebsstranggrößen zur Illustration der Erfindung; und

Figur 3  ein Diagramm zu Erläuterung der Berechnung einer prädiktiven, in der Kupplung beim Anfahrvorgang freigesetzten Energie.

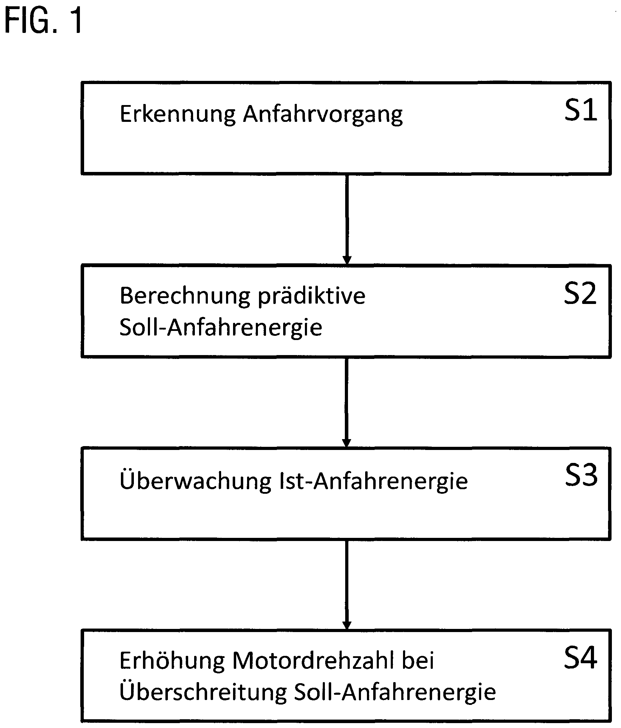

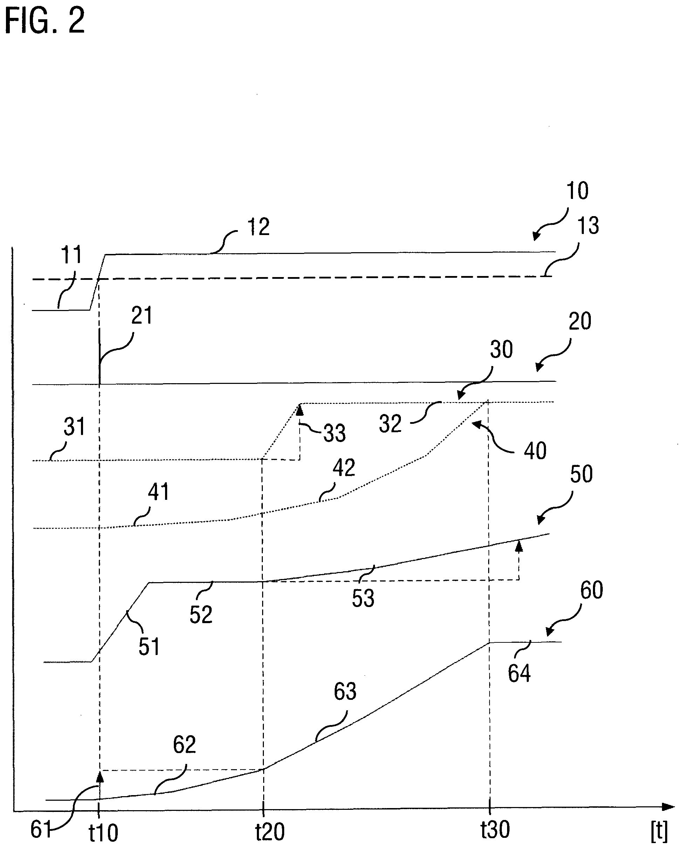

Im Rahmen der Erläuterung der Schritte der Figur 1 wird nachfolgend wiederholt auf die Figur 2 Bezug genommen, die den zeitlichen Verlauf relevanter Antriebsstranggrößen eines Nutzfahrzeugs mit einem turboaufgeladenen Verbrennungsmotor als Antriebsmotor und einer als automatisierte Reibungskupplung ausgebildeten Anfahr- und Schaltkupplung illustriert.

Hierbei stellt die mit dem Bezugszeichen 10 versehene Kurve die Veränderung des Fahrpedalwegs über die Zeit dar. Die Kurve 30 stellt den zeitlichen Verlauf der Motordrehzahl und die Kurve 40 den zeitlichen Verlauf der Getriebeeingangsdrehzahl dar. Die Kurve 50 zeigt den zeitlichen Verlauf des Motormoments beim Anfahrvorgang und die Kurve 60 den zeitlichen Verlauf der in der Kupplung beim Anfahrvorgang freigesetzten Energie (Kupplungs-Energie).

In Schritt S1 der Figur 1 wird der Zeitpunkt eines Anfahrvorgangs des Nutzfahrzeugs ermittelt. Vorliegend erfolgt dies anhand der Erkennung einer Betätigung des Fahrpedals. Wie in Figur 2 dargestellt, betätigt der Fahrer im Zeitpunkt t10 das Fahrpedal, um einen Anfahrvorgang zu starten. Dadurch steigt der Wert des Fahrpedalwegs ausgehend von einem Wert 0 im Bereich 11 (nicht betätigtes Fahrpedal) auf einen Wert von beispielsweise 80-90% des maximalen Fahrpedalwegs im Bereich 12. Wenn bei stehendem Fahrzeug das Fahrpedal soweit durchgedrückt wird, dass der Fahrpedalweg 10 einen vorbestimmten Schwellenwert, der in Figur 2 mit der gestrichelten Linie 13 gekennzeichnet ist, überschreitet, erkennt die Steuerungsvorrichtung des Antriebsstrangs, die eine Motor-, Getriebe, und Kupplungssteuerung umfasst, dass der Fahrer anfahren möchte.

Das Überschreiten des Schwellenwerts 13 erzeugt ein Triggersignal 21, dargestellt durch den Peak der Kurve 20 in Figur 2, das eine Berechnung eines aktuellen Soll-Werts einer Energie, die beim Anfahrvorgang durch Schlupf in der Kupplung freigesetzt wird, startet.

In Schritt 2 erfolgt die Berechnung eines für den aktuellen Anfahrvorgang erwarteten Energieeintrags in die Kupplung, der durch Schlupf beim Anfahren erzeugt wird, wobei die aktuelle Anfahrsituation des Fahrzeugs berücksichtigt wird. Der erwartete Energieeintrag stellt somit einen Soll-Wert E_soll dar, der unter Annahme eines korrekt ermittelten Fahrwiderstands bei dem bevorstehenden Anfahrvorgang schlupfbedingt in der Kupplung freigesetzt werden müsste. Zur Berechnung des aktuellen Fahrwiderstands werden insbesondere die aktuelle Fahrbahnsteigung mittels eines Neigungssensors und das aktuelle Fahrzeuggewicht ermittelt und bei der Berechnung des erwarteten Energieeintrags in die Kupplung berücksichtigt.

Ergibt die Berechnung des prädizierten Energieeintrags beispielsweise einen Wert von 20KJ, dann wird dieser Wert nochmals um einen Offset-Wert erhöht, um sicherzustellen, dass übliche Schwankungen der Höhe des Energieeintrags nicht als eine kritische Anfahrsituation erkannt werden. Mit anderen Worten ist der Offset-Wert auf einen Wert >0 so festgelegt, dass der tatsächliche Energieeintrag die Summe aus dem erwarteten Energie-Eintrag und Offset-Wert nur dann überschreitet, wenn ein Problem beim Anfahren auftritt. Die Höhe des so bestimmten Energieeintrags, addiert mit dem Offset-Wert, ist durch die Höhe des Pfeils 61 der Kurve 60 dargestellt, wobei die Kurve 60 den zeitlichen Verlauf der in der Kupplung beim Anfahrvorgang tatsächlich freigesetzten Energie (Kupplungsenergie) darstellt.

Diese tatsächlich in der Kupplung beim Anfahrvorgang schlupfbedingt freigesetzte Energie E_ist wird in Schritt 3 fortlaufend während des Anfahrvorgangs bestimmt und dadurch überwacht. Diese tatsächliche Kupplungsenergie, dargestellt durch die Kurve 60, ergibt sich in an sich bekannter Weise durch Integration der im Verlaufe der Schlupf-Betriebszeit in die Kupplung eingeleiteten Leistung und der in der gleichen Zeit davon abgeführten Energie. Das von der Brennkraftmaschine in die Kupplung eingeleitete Kupplungsmoment M_k bildet dabei einen wesentlichen Beitrag zur Energie, die in die Kupplung eingeleitet wird. Die während der Schlupfphase eines Anfahr-Kupplungsvorgangs in die Kupplung eingetragene Kupplungsenergie E kann daher aus dem Produkt aus Kupplungsmoment M_k, Schlupfdrehzahl und Schlupf-Betriebszeit ermittelt werden. Die Schlupfdrehzahl entspricht der Differenz der Kupplungseingangsdrehzahl, vorliegend der Motordrehzahl n_motor, und der Kupplungsausgangsdrehzahl, vorliegend der Getriebeeingangsdrehzahl n_getriebe. Die Motordrehzahl n_motor und die Getriebeeingangsdrehzahl n_getriebe werden im Schlupfbetrieb sensorisch erfasst.

Die Energie E_ist, die die Kupplung als Reibleistung aufnimmt, lässt sich somit nach der Gleichung E = integral [M_k * (n_motor- n_getriebe)] dt berechnen, wobei über die Schlupfphase t integriert wird.

Bei einer automatisierten Kupplung eines Nutzfahrzeugs erfolgt der Anfahrvorgang mit einer konstanten Motordrehzahl 31, die der Leerlaufdrehzahl von beispielsweise 600 U/min entspricht oder nahe an dieser liegt, um den durch Schlupf erzeugten Verschleiß der Kupplung zu minimieren.

Der Fahrer kann somit durch Betätigung des Fahrpedals die zum Anfahren verwendete Motordrehzahl nicht erhöhen. Die Motordrehzahl kann aber von der Motorsteuerung abhängig von der aktuellen Fahrsituation variiert werden. Falls zum Beispiel die Motorsteuerung erkennt, dass das Fahrzeug versucht, an einer Steigung anzufahren, kann eine erhöhte initiale Motordrehzahl 31 für den Anfahrvorgang gewählt werden.

Nach Start des Anfahrvorgangs im Zeitpunkt t10 erfolgt ein schrittweises Einrücken der Kupplung. Dadurch steigt die Getriebeeingangsdrehzahl langsam an, was durch den Abschnitt 41 der Linie 40 dargestellt ist.

Zeitgleich baut sich ein Motormoment auf, was durch den Anstieg im Abschnitt 51 dargestellt ist. Nach Erreichen des Motorsaugmoments bleibt das Motormoment im Bereich 52 dann bis zum Zeitpunkt t20 im Wesentlichen konstant oder steigt nur leicht an, dargestellt durch den Abschnitt 53. Dies liegt daran, dass bei einem Antriebsmotor eines Nutzfahrzeugs, der als turboaufgeladener Dieselmotor ausgebildet ist, aufgrund der nur geringen Anlaufdrehzahlen während des Anfahrvorgangs nur ein unterhalb des Volllastmomentes liegendes Saugmoment erreicht wird, da der Turbolader in der ersten Anlaufphase des Motors noch keine deutliche Erhöhung des Ladedrucks und damit des Motormomentes bewirkt. Das Motorsaugmoment wird im Wesentlichen nur durch den verfügbaren Motorhubraum und die Luft, die durch die Eingangssaugung des Motors eingeführt wird, aufgebaut.

Während dieser Zeit befindet sich die Kupplung noch im Schlupf, die Motordrehzahl 30 ist also höher als die Getriebeeingangsdrehzahl 40. Bedingt durch den Kupplungsschlupf wird somit Wärmeenergie E_ist in der Kupplung freigesetzt, die, wie zuvor erwähnt, fortlaufend berechnet wird.

Im Zeitpunkt t20 erreicht die in der Kupplung tatsächlich freigesetzte Schlupfenergie E_ist den vorbestimmten Schwellenwert 61 (E_soll+Offset-Wert). Das Erreichen dieses Schwellenwerts zeigt an, dass mehr Energie in die Kupplung eingetragen worden ist, als bei einem normalen Anfahrvorgang bei vergleichbarer Steigung und Fahrzeuggewicht erwartet worden wäre. Möglicherweise wurde die Fahrbahnsteigung falsch ermittelt oder das Fahrzeuggewicht falsch geschätzt.

Erfindungsgemäß wird dann in Schritt S4 eine Erhöhung der Motordrehzahl 30 um den Wert 33 eingeleitet, so dass diese vom Wert 31 auf einen neuen Wert 32 ansteigt. Durch die Erhöhung der Motordrehzahl wird ein Anfahren ermöglicht. Gleichzeitig steigt das aufgebaute Motormoment 53 wieder an, bedingt durch den nun einsetzenden Turbolader. Dadurch steigt die Getriebeeingangsdrehzahl 40 sehr stark im Bereich 42 an, bis Synchrondrehzahl mit der Motordrehzahl im Punkt t30 erreicht ist. Ebenso steigt der Energieeintrag in die Kupplung im Abschnitt 63 sehr stark an, bis die Synchrondrehzahl im Zeitpunkt t30 erreicht ist, und ändert sich nachfolgend vorerst nicht mehr (siehe Abschnitt 64). Es treten ferner Abkühleffekte auf, die hier vernachlässigt wurden.

Die Erfindung ermöglicht somit ein sicheres Anfahren auch in Situationen, in denen beispielsweise die ursprünglich gewählte Motordrehzahl 31 zum Anfahren zu gering gewählt wurde, weil beispielsweise die Fahrbahnsteigung zu gering geschätzt oder die aktuelle Zuladung des Fahrzeugs zu niedrig angesetzt wurde.

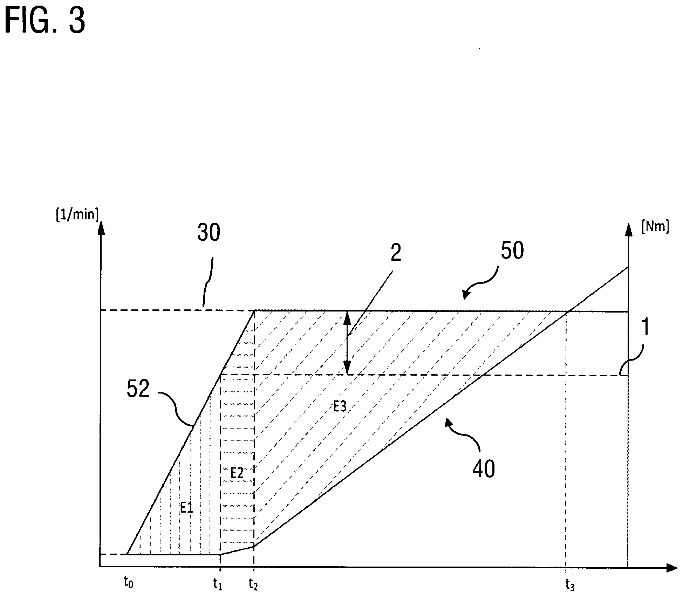

Figur 3 zeigt beispielhaft den zeitlichen Verlauf von Antriebsstranggrößen für einen "normalen" Anfahrvorgang, bei dem keine Drehzahlerhöhung notwendig ist und bei dem die in der Kupplung schlupfbedingt freigesetzte Reibenergie E_soll dem Soll-Wert entspricht. Der in Figur 3 gezeigte Kurvenverlauf wird der in Schritt S2 durchgeführten Berechnung des prädiktiven Soll-Werts E_soll der in der automatisierten Kupplung als Reibleistung bei einem Anfahrvorgang freigesetzten Energie (Kupplungsenergie) zu Grunde gelegt.

Die gestrichelte Linie 30 stellt die beim Anfahrvorgang konstante Motordrehzahl n_motor dar, während die Linie 40 den zeitlichen Verlauf der Getriebeeingangsdrehzahl n_getriebe darstellt. Die durchgezogene Linie 50 gibt den Verlauf des Motormoments an.

Im Zeitpunkt t0 beginnt der Anfahrvorgang durch Betätigung des Fahrpedals. In diesem Zeitpunkt ist die Differenzdrehzahl an der Kupplung maximal. Zum Zeitpunkt t3 ist Synchrondrehzahl zwischen Motordrehzahl und Getriebeeingangsdrehzahl erreicht. Dies kennzeichnet das Ende des Anfahrvorgangs. Bei dem in Figur 3 dargestellten "normalen" Anfahrvorgang ist, im Unterschied zu der Situation in Figur 2, das Erreichen der Synchrondrehzahl mit der initial eingestellten Motordrehzahl möglich, die nicht erhöht werden muss.

Zwischen t0 und t1 wird ein Motormoment aufgebaut. Das Fahrzeug bewegt sich jedoch noch nicht, da der aktuelle Fahrwiderstand, dargestellt durch die gestrichelte Linie 1, noch zu hoch ist. Zwischen t1 und t2 steigt das aufgebaute Motormoment über das Niveau des Fahrwiderstandsmoments, und das Fahrzeug bewegt sich dadurch initial. Im Bereich zwischen t2 und t3 wird das volle Motorsaugmoment erreicht. Das Fahrzeug beschleunigt mit dem Vortriebsmoment, was sich aus der Differenz zwischen Motormoment und Fahrwiderstandsmoment ergibt. Die Höhe des Vortriebsmoments ist in Figur 3 durch die Höhe des Pfeils 2 dargestellt. Im Zeitpunkt t3 sind der Schlupfzustand der Kupplung und der Anfahrvorgang beendet.

Die in Figur 3 eingezeichneten Flächenabschnitte E1, E2, und E3 sollen illustrieren, dass sich die erwartete Kupplungsenergie E_soll für den bevorstehenden Anfahrvorgang durch eine entsprechende Kurvendiskussion und mit den Formeln zur Berechnung der Kupplungsenergie prädiktiv berechnen lässt, so dass sich die Gesamtkupplungsenergie E_soll ergibt als:

$$E\_soll = E1 + E2 + E3$$

E1, E2 und E3 bezeichnen jeweils die Energie, welche im jeweiligen Zeitraum (E1: t0 bis t1; E2: t1 bis t2; E3: t2 bis t3) in die Kupplung durch Reibarbeit normalerweise eingebracht wird. Abkühlungseffekte sowie ein sich aufbauendes Turboladermoment werden hier nicht berücksichtigt. Die eingebrachte Energie E_soll errechnet sich generell aus dem Integral der Reibleistung über die Zeit:

$$E = \int P\,dt$$

Die Reibleistung P ergibt sich aus:

$$P = M \cdot \omega,$$

berechnet aus dem anliegenden Kupplungsmoment M und der Differenzdrehzahl $\omega$ zwischen den beiden Reibflächen, so dass sich die Reibleistung aus folgender Formel ergibt:

$$E = \int M \cdot \omega\,dt$$

Anstatt tatsächlich gemessener, z. B. sensorisch erfasster, Ist-Werte für M und $\omega$, die für die Berechnung in Schritt S3 verwendet werden, werden für die prädiktive Berechnung in Schritt S2 die Werte für M und $\omega$, sowie für t0 bis t3 anhand in der Steuerung hinterlegter Berechnungsvorschriften prädiziert.

Für die eingebrachte Energie im ersten Abschnitt wird angenommen, dass das übertragene (Kupplungs-)Moment M mit einem vorgegebenen Gradienten $M$ bis zum Erreichen des Fahrwiderstandmoments $M_{FW}$ steigt. Dies geschieht bei einer konstanten Differenzdrehzahl zwischen motorseitiger Anpressplatte (Leerlaufdrehzahl $\omega_E$) und stehender, getriebeseitiger Kupplungsreibfläche.

$$E1 = \int_{t_0}^{t_1} \dot{M} \cdot t \cdot \omega_E \, dt$$

Die eingebrachte Energie im zweiten Abschnitt bezeichnet die Energie, welche vom Ende des ersten Abschnitts bis zum Erreichen des vollen Motorsaugmomentes $M_A$ in die Kupplung eingebracht wird. Da zu diesem Zeitpunkt das zum Losfahren benötigte Kupplungsmoment bereits überschritten wurde, beginnt das Fahrzeug sich in Bewegung zu setzen. Damit einher geht eine Beschleunigung der bislang stehenden Kupplungsreibfläche. Diese Drehrate wird als $\omega_1$ bezeichnet. Die Drehbeschleunigung $\dot{\omega}_1$ hängt vom zur Verfügung stehenden Moment $\dot{M} \cdot t$ - $M_{FW} > 0$ und der umgerechneten Rotationsträgheit $J$ des gesamten Fahrzeugs ab.

Analog zum vorigen Vorgehen kann so die eingebrachte Energie über das Integral der Reibleistung berechnet werden.

$$E2 = \int_{t_1}^{t_2} \dot{M} \cdot t \cdot \big(\omega_E - \omega_1(t)\big) dt$$

$$\omega_1(t) = \int_{t_1}^{t} \dot{\omega}_1 \, dt$$

$$\dot{\omega}_1 = \frac{\dot{M} \cdot t - M_{FW}}{J}$$

Im dritten Abschnitt wird nun die Energie berechnet, welche vom Ende des zweiten Abschnitts bis zum Erreichen der Synchrondrehzahl durch Reibung in die Kupplung eingebracht wird. Bei der Synchrondrehzahl ist die Drehzahldifferenz zwischen motorseitiger Anpressplatte und getriebeseitiger Kupplungsreibfläche = Null. Analog zur Berechnung von E2 wird das als konstant angenommene Motormoment $M_A$ und die sich laufend ändernde Differenzdrehzahl verwendet. $\omega_2$ bezeichnet dabei die Drehrate der getriebeseitigen Kupplungsreibfläche und berechnet sich aus der Drehrate zum Ende des zweiten Abschnitts $\omega_1(t_2)$ und der Drehbeschleunigung während des dritten Abschnitts $\dot{\omega}_2$, welche sich analog zu $\dot{\omega}_1$ aus dem zur Verfügung stehenden Moment $M_A$ - $M_{FW}$ sowie der Rotationsträgheit $J$ des gesamten Fahrzeugs bilden lässt.

$$E3 = \int_{t_2}^{t_3} M_A \cdot \big(\omega_E - \omega_2(t)\big) dt$$

$$\omega_{2(t)} = \omega_1(t_2) + \int_{t_1}^{t} \dot{\omega}_2 \, dt$$

$$\dot{\omega}_2 = \frac{M_A - M_{FW}}{J}$$

Durch Substitution aller nun bekannten Formeln ergibt sich als Berechnungsvorschrift für die Energie E_soll:

$$E\_soll = \int_{t_0}^{t_1} \dot{M} \cdot t \cdot \omega_E \, dt + \int_{t_1}^{t_2} \dot{M} \cdot t \cdot \left( \omega_E - \int_{t_1}^{t} \frac{\dot{M} \cdot t - M_{FW}}{J} \, dt \right) dt +$$

$$\int_{t_2}^{t_3} M_A \cdot \left( \omega_E - \left( \int_{t_1}^{t_2} \frac{\dot{M} \cdot t - M_{FW}}{J} \, dt + \int_{t_1}^{t} \frac{M_A - M_{FW}}{J} \, dt \right) \right) dt$$

.

Hierbei ist anzumerken, dass die Zeiten $t_0$ bis $t_3$ zu Gunsten einer besseren Übersichtlichkeit nicht substituiert wurden.

Zur Erläuterung der vorstehenden Berechnung wird noch folgendes angemerkt. Die Zeitpunkte für die Integration der Energien ergeben sich aus der Betrachtung des Anfahrvorganges gemäß der Darstellung in der Figur 3, die die einzelnen Phasen des Anfahrvorgangs illustriert.

$$t_0 = 0$$

$$t_1 = \frac{M_{FW}}{\dot{M}}$$

$$t_2 = \frac{M_A}{\dot{M}}$$

$$t_3 = t_2 + \left( \frac{\omega_E - \omega_1(t_1)}{\dot{\omega}_2} \right)$$

Hierbei ist es erforderlich, nach der Berechnung eines jeden Abschnitts die Drehrate der getriebeseitigen Kupplungsreibfläche zum Ende des Abschnitts zu überprüfen. Sollte diese Drehrate die des Motors übersteigen, zeigt dies einen bereits zu einem früheren Zeitpunkt abgeschlossenen Anfahrvorgang an. Es muss also gelten:

$$0 \leq \omega_1 \leq \omega_2 \leq \omega_E$$

Die Berechnung des Trägheitsmomentes $J$ des gesamten Fahrzeugs, bezogen auf den Getriebeeingang, wird wie folgt durchgeführt:

$$J = J_{antriebsstrang} + \frac{m_{FZG} \cdot r_{reifen}^2}{i_{antriebsstrang}^2}$$

$m_{FZG}$ bezeichnet die gesamte Fahrzeugmasse, $r_{reifen}$ den Reifenradius, $i_{antriebsstrang}$ die Gesamtübersetzung zwischen Getriebeeingang und Radachse und $J_{antriebsstrang}$ die Massenträgheit des Antriebsstranges zwischen Getriebeeingang und Radachse, inklusive Räder.

Das Fahrwiderstandsmoment

$$M_{FW} = F_{FW} \cdot \frac{r_{reifen}}{i_{antriebsstrang} \cdot \eta_{antriebsstrang}}$$

errechnet sich aus dem Fahrwiderstand

$$F_{FW} = F_{hill} + F_{roll} + F_{aero}$$

, bestehend aus der Hangabtriebskraft $F_{hill}$, dem Rollwiderstand $F_{roll}$ sowie dem aerodynamischen Luftwiderstand $F_{aero}$ und dem geschätzten Wirkungsgrad des Antriebsstrangs $\eta_{antriebsstrang}$.

**Bezugzeichen liste**

| | |
|---|---|
| 1 | Fahrwiderstandsmoment |
| 2 | Vortriebsmoment |
| 13 | Fahrpedalschwellenwert |
| 10-12 | Zeitlicher Verlauf Fahrpedalweg |
| 20, 21 | Detektionssignal für Anfahrvorgang |
| 30-32 | Zeitlicher Verlauf Motordrehzahl |
| 33 | Motordrehzahlerhöhung |
| 40-42 | Zeitlicher Verlauf Getriebeeingangsdrehzahl |
| 50-54 | Zeitlicher Verlauf Motormoment |
| 60, 62-64 | Zeitlicher Verlauf des Energieeintrags in die Kupplung |
| 61 | Sollenergieeintrag in die Kupplung beim Anfahrvorgang plus Offset-Wert |

**Patentansprüche**

1. Verfahren zur Steuerung eines Antriebsstrangs beim Anfahrvorgang eines Kraftfahrzeugs mit einem Motor, einem Getriebe und einer automatisch betätigten Kupplung, umfassend:

   Bestimmung eines aktuellen Sollwerts einer Größe, die sich in Abhängigkeit von einem beim Anfahrvorgang durch Schlupf erzeugten Energieeintrag in die Kupplung verändert;
   Bestimmung eines Verlaufs eines Ist-Werts der Größe während des Anfahrvorgangs des Kraftfahrzeugs,
   Erhöhen der Motordrehzahl, wenn der Ist-Wert der Größe den aktuellen Soll-wert um einen vorbestimmten Offset-Wert überschritten hat.

2. Verfahren nach Anspruch 1, **dadurch gekennzeichnet,**

   (a) **dass** die Größe eine Energie ist, die beim Anfahrvorgang durch Schlupf in der Kupplung freigesetzt wird; und/oder
   (b) **dass** die Größe eine Temperatur ist, die beim Anfahrvorgang durch Schlupf in der Kupplung erreicht wird.

3. Verfahren nach Anspruch 1, **dadurch gekennzeichnet, dass** die Bestimmung des aktuellen Sollwerts der Größe gestartet wird, wenn bei stehendem Fahrzeug das Fahrpedal betätigt wird und ein vorbestimmter Schwellwert für den Fahrpedalweg überschritten wird.

4. Verfahren nach Anspruch 1 oder 2, **dadurch gekennzeichnet, dass** der aktuelle Sollwert der Größe in Abhängigkeit von zumindest einer der folgenden Größen ermittelt wird: ein Motormomentgradient, ein Saugmoment des Motors, eine Antriebsstrangübersetzung, eine Massenträgheit des Antriebsstrangs, ein Antriebsstrangverlust, eine Reifengröße, ein Kupplungsschließgradient und/oder ein aktueller Fahrwiderstand bzw. wenigstens eine den aktuellen Fahrwiderstand beeinflussende Größe, wie beispielsweise eine aktuelle Fahrbahnsteigung und eine aktuelle Fahrzeugmasse.

5. Verfahren nach einem der vorhergehenden Ansprüche, **dadurch gekennzeichnet, dass** der Offset-Wert in Abhängigkeit von der aktuellen Fahrbahnsteigung und/oder von dem aktuellen Fahrzeuggewicht festgelegt wird.

6. Verfahren nach einem der vorhergehenden Ansprüche, **dadurch gekennzeichnet, dass** eine Zwangsschließung der Kupplung eingeleitet wird,

(a) falls der Ist-Wert der Größe nach der Erhöhung der Motordrehzahl einen vorbestimmten Schwellenwert überschreitet, ohne dass eine Synchrondrehzahl zwischen Motordrehzahl und Getriebeeingangsdrehzahl erreicht wurde; und/oder

(b) falls nach der Erhöhung der Motordrehzahl nicht innerhalb einer vorgegebenen Zeit eine Synchrondrehzahl zwischen Motordrehzahl und Getriebeeingangsdrehzahl erreicht wird.

**7.** Verfahren nach einem der vorhergehenden Ansprüche, **gekennzeichnet durch** das Bestimmen einer Anfahrmotordrehzahl, mit der der Anfahrvorgang gestartet wird, in Abhängigkeit von einem aktuellen Fahrwiderstands oder in Abhängigkeit von wenigstens einer den aktuellen Fahrwiderstand beeinflussenden Größe.

**8.** Steuerung für den Antriebsstrang beim Anfahren eines Kraftfahrzeugs mit einem Motor, einem Getriebe und einer automatisch betätigten Kupplung, die eingerichtet ist, das Verfahren gemäß einem der Ansprüche 1 bis 6 durchzuführen.

**9.** Kraftfahrzeug, vorzugsweise Nutzfahrzeug, mit einer Steuerung nach Anspruch 8.


**Claims**

**1.** A method for controlling a drive train during a starting process of a motor vehicle having an engine, a transmission and an automatically activated clutch, comprising:

determining a current setpoint value of a variable which changes as a function of an input of energy into the clutch, generated by slip during the starting process;
determining a profile of an actual value of the variable during a starting process of the motor vehicle,
and **characterized by** increasing
the engine speed if the actual value of the variable has exceeded the current setpoint value by a predetermined offset value.

**2.** The method according to Claim 1, **characterized**

(a) **in that** the variable is energy which is released by slip in the clutch during the starting process; and/or
(b) **in that** the variable is a temperature which is reached as a result of slip in the clutch during the starting process.

**3.** The method according to Claim 1, **characterized in that** the determination of the current setpoint value of the variable is started if the accelerator pedal is activated when the vehicle is stationary and a predetermined threshold value for the accelerator pedal travel is exceeded.

**4.** The method according to Claim 1 or 2, **characterized in that** the current setpoint value of the variable is determined as a function of at least one of the following variables: an engine torque gradient, an intake gradient of the engine, a drive train transmission ratio, a mass inertia of the drive train, a drive train loss, a tyre size, a clutch closing gradient and/or a current driving resistance or at least one variable which influences the current driving resistance, such as for example a current gradient of the underlying surface and a current vehicle mass.

**5.** The method according to one of the preceding claims, **characterized in that** the offset value is defined as a function of the current gradient of the underlying surface and/or of the current weight of the vehicle.

**6.** The method according to one of the preceding claims, **characterized in that** forced closing of the clutch is initiated,

(a) if the actual value of the variable after the increase of the engine speed exceeds a predetermined threshold value without a synchronous rotational speed having been reached between the engine speed and the transmission input rotational speed; and/or
(b) if a synchronous rotational speed between the engine speed and the transmission input rotational speed is not reached within a predefined time after the increasing of the engine speed.

**7.** The method according to one of the preceding claims, **characterized by** the determination of a starting engine speed with which the starting process is started, as a function of a current driving resistance or as a function of at least one variable which influences the current driving resistance.

**8.** A controller for the drive train during the starting of a motor vehicle having an engine, a transmission and an automatically activated clutch which is configured to carry out the method according to one of Claims 1 to 6.

**9.** A motor vehicle, preferably utility vehicle, having a controller according to Claim 8.


**Revendications**

**1.** Procédé de commande d'une chaîne cinématique lors du démarrage d'un véhicule automobile, avec un moteur, une transmission et un embrayage à actionnement automatique, comprenant :

la définition d'une valeur de consigne actuelle d'une grandeur qui varie en fonction d'un apport en énergie dans l'embrayage qui est produit par glissement lors du démarrage;
la définition d'une courbe d'une valeur effective de la grandeur pendant le démarrage du véhicule automobile, et **caractérisé par** l'augmentation de la vitesse de rotation du moteur quand la valeur effective de la grandeur a dépassé la valeur de consigne actuelle selon une valeur de décalage prédéfinie.

**2.** Procédé selon la revendication 1, **caractérisé en ce que**

(a) la grandeur est une énergie qui est libérée par le glissement dans l'embrayage lors du démarrage ; et/ou
(b) la grandeur est une température qui est atteinte par le glissement dans l'embrayage lors du démarrage.

**3.** Procédé selon la revendication 1, **caractérisé en ce que** la définition de la valeur de consigne actuelle de la grandeur est lancée quand, pendant que le véhicule est à l'arrêt, la pédale d'accélérateur est actionnée et une valeur de seuil prédéfinie pour la course de pédale d'accélérateur est dépassée.

**4.** Procédé selon la revendication 1 ou 2, **caractérisé en ce que** la valeur de consigne actuelle de la grandeur est déterminée en fonction d'au moins l'une des grandeurs suivantes : un gradient de couple moteur, un couple d'aspiration du moteur, une démultiplication de la chaîne cinématique, une inertie de masse de la chaîne cinématique, une perte de la chaîne cinématique, une dimension de pneus, un gradient de fermeture d'embrayage et/ou une résistance à l'avancement actuelle ou respectivement au moins une grandeur influençant la résistance à l'avancement actuelle, comme par exemple une pente de la chaussée actuelle et une masse de véhicule actuelle.

**5.** Procédé selon l'une des revendications précédentes, **caractérisé en ce que** la valeur de décalage est stipulée en fonction de la pente de la chaussée actuelle et/ou du poids du véhicule actuel.

**6.** Procédé selon l'une des revendications précédentes, **caractérisé en ce qu'**une fermeture forcée de l'embrayage est commencée,

(a) au cas où la valeur effective de la grandeur dépasse une valeur de seuil prédéfinie après l'augmentation de la vitesse de rotation du moteur sans qu'une vitesse de rotation synchrone entre la vitesse de rotation du moteur et la vitesse de rotation d'entrée de transmission ait été atteinte ; et/ou
(b) au cas où, après l'augmentation de la vitesse de rotation du moteur, une vitesse de rotation synchrone entre le régime du moteur et la vitesse de rotation d'entrée de transmission n'est pas atteinte à l'intérieur d'une durée spécifiée.

**7.** Procédé selon l'une des revendications précédentes, **caractérisé par** la définition d'une vitesse de rotation du moteur de démarrage avec laquelle le démarrage a été lancé, en fonction d'une résistance à l'avancement actuelle ou en fonction d'au moins une grandeur influençant la résistance à l'avancement actuelle.

**8.** Commande pour la chaîne cinématique lors du démarrage d'un véhicule automobile, avec un moteur, une transmission et un embrayage à actionnement automatique, qui est agencée pour réaliser le procédé selon l'une des revendications 1 à 6.

**9.** Véhicule automobile, de préférence véhicule utilitaire, avec une commande selon la revendication 8.

# FIG. 1

| | |
|---|---|
| Erkennung Anfahrvorgang | S1 |

| | |
|---|---|
| Berechnung prädiktive Soll-Anfahrenergie | S2 |

| | |
|---|---|
| Überwachung Ist-Anfahrenergie | S3 |

| | |
|---|---|
| Erhöhung Motordrehzahl bei Überschreitung Soll-Anfahrenergie | S4 |

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005029566 A1
- US 20140141935 A1